# EUROPÄISCHE PATENTSCHRIFT

(11) **EP 2 861 607 B1**
(45) Veröffentlichungstag und Bekanntmachung des Hinweises auf die Patenterteilung: **22.06.2016**
(21) Anmeldenummer: 13724722.7
(22) Anmeldetag: 23.04.2013
(51) Int. Cl.: C07F 9/38, A61K 31/00

(54) **POLYSUBSTITUIERTE ARENE UND DEREN SYNTHESE**
POLYSUBSTITUTED ARENES AND SYNTHESIS THEREOF
ARÈNES POLYSUBSTITUÉS ET LEUR SYNTHÈSE

(30) Priorität: 07.05.2012 DE 102012104007
(43) Veröffentlichungstag der Anmeldung: 22.04.2015
(73) Patentinhaber: Jacobs University Bremen gGmbH, 28759 Bremen (DE)
(72) Erfinder: RÖSCHENTHALER, Gerd-Volker, 28357 Bremen (DE); DUDA, Blazej, 64-125 Poniec (PL); TVERDOMED, Sergey N., 28197 Bremen (DE)
(74) Vertreter: Weidner Stern Jeschke
(86) Internationale Anmeldenummer: PCT/DE2013/100150
(87) Internationale Veröffentlichungsnummer: WO 2013/167117

(56) Entgegenhaltungen:
- SERGEY N TVERDOMED ET AL: "An effective synthetic route to-difluoromethyl arylphosphosphonates: studies on the reactivity of phosphorus- and fluorine-containing functions", TETRAHEDRON, ELSEVIER SCIENCE PUBLISHERS, AMSTERDAM, NL, Bd. 67, Nr. 21, 22. März 2011 (2011-03-22) , Seiten 3887-3903, XP028384421, ISSN: 0040-4020, DOI: 10.1016/J.TET.2011.03.076 [gefunden am 2011-03-30]
- TSUTOMU KONNO ET AL: "Rhodium-catalyzed [2+2+2] cycloaddition of various fluorine-containing alkynes-novel synthesis of multi-substituted fluoroalkylated aromatic compounds", ORGANIC & BIOMOLECULAR CHEMISTRY, Bd. 8, Nr. 7, 22. Februar 2010 (2010-02-22), Seite 1718, XP055067727, ISSN: 1477-0520, DOI: 10.1039/b926192c

## Beschreibung

Die Erfindung betrifft polysubstiuierte Arene, insbesondere polysubstiuierte Benzene und Naphthalene, sowie ein Verfahren zu deren Herstellung.

Vollständig substituierte Benzene und Naphthalene sind von großem Interesse, da sie eine signifikante Bioaktivität, zum Beispiel antientzündliche und antihyperglykämische Eigenschaften, aufweisen [2]. Solche Verbindungen sind auch häufig zur Synthese von bioaktiven heterozyklischen Verbindungen verwendet worden [3]. Unter ihnen haben die so genannten Akzeptor-Donor-Akzeptor(A-D-A)-Systeme [4] (z.B. 2,4-Dicyanoaniline) an dem Arylring ein wichtiges Potenzial für künstliche Fotosynthesesysteme [5] und auch nichtlineare optische Eigenschaften [6] gezeigt.

Die Phosphonatgruppe hydrolysiert anders als die natürlich vorkommenden Phosphat-Analoge nicht leicht in biologischer Umgebung und ist daher für eine Vielzahl von Anwendungen wertvoller [7]. Fluorierte Gruppen verbessern demgegenüber die chemische und physikalische Stabilität und überschreiten auch die Blut-Hirn-Schranke besser als vergleichbare nichtfluorierte Verbindungen [8]. In diesem Zusammenhang sei darauf hingewiesen, dass 20-25 % der in der pharmazeutischen Pipeline befindlichen Arzneimittel mindestens ein Fluoratom aufweisen.

Polysubstituierte Benzene und Naphthalene wurden bislang hauptsächlich über die sequenzielle Einführung bestimmter Substituenten, beispielsweise elektrophile [9], nukleophile aromatische Substitution [10] am Arenzentrum und durch Kopplungsreaktionen [11] hergestellt. Darüber hinaus ist auch eine Übergangsmetall-katalysierte Zyklisierung der entsprechenden ungesättigten Substrate zur Erzeugung aromatischer Verbindungen gut bekannt [12]. Kürzlich wurde eine Reaktion von 2-Aminoprop-1-en-1,3,3-tricarbonitiril (IIb) mit Nitroalkenderivaten 1 erfolgreich eingesetzt, um polysubstituierte Benzene 2 unter Einsatz von Mikrowellenbestrahlung herzustellen [13].

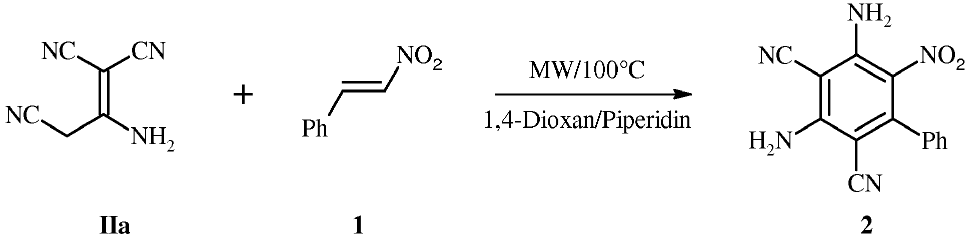

Darüber hinaus haben Singh et al. gefunden, dass 2H-Pyran-2-one 3 über nukleophile induzierte Ringtransformationsreaktion unter Reaktion mit Malononitril in Gegenwart einer starken Base zu arylierten Benzenderivaten 4 umgewandelt werden können. [2b]

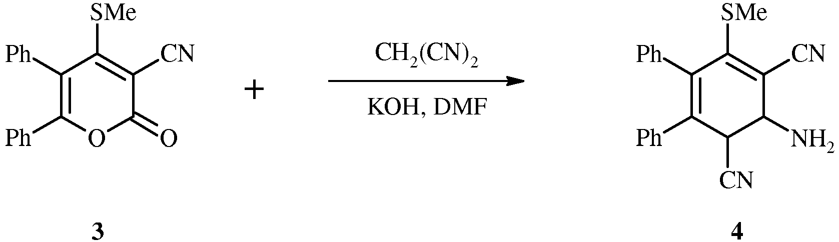

Naphthalenderivate [14] 6 wurden erfolgreich durch Reaktion von 2-(Cyanomethyl)benzonitril IIb mit 3-Brom-2-(ethylthio)but-2-ennitrilen 5 in guten ausbeuten erhalten [15].

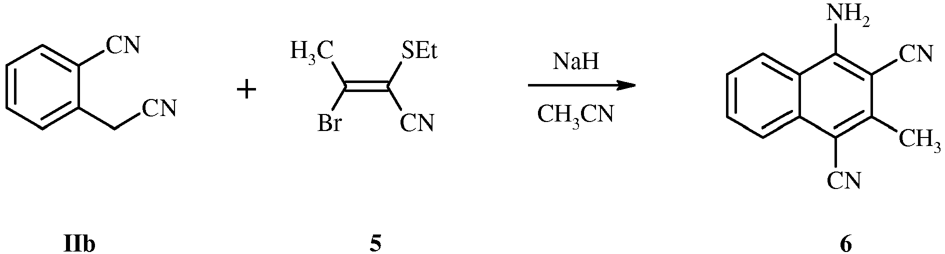

Die Schwierigkeit, funktionelle Gruppen, beispielsweise Amino-, Cyano- oder Estergruppen, in einen aromatischen Ring einzuführen, ist gut dokumentiert [1c, 16]. Es besteht jedoch ein Bedarf an polysubstituierten Arenen, zum Beispiel zum Einsatz als Pharmakophore [18], und Verfahren zu deren Herstellung.

Es ist daher Aufgabe der vorliegenden Erfindung, solche polysubstituierten Arene bereitzustellen. Darüber hinaus ist es eine Aufgabe der vorliegenden Erfindung, ein vergleichsweise einfaches, atomeffizientes und regioselektives Verfahren zur Herstellung von polysubstituierten Arenen bereitzustellen.

Die Aufgabe wird gelöst durch die Gegenstände der nebengeordneten Ansprüche. Zweckmäßige Ausgestaltungen der Erfindung sind in den Unteransprüchen angegeben.

In einem ersten Aspekt stellt die vorliegende Erfindung daher eine Verbindung der allgemeinen Formel (I) 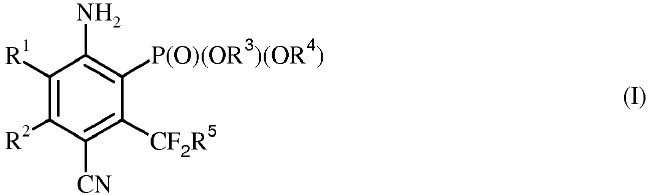 bereit, wobei
R¹ und R², unabhängig voneinander, CN oder NH₂ sind oder zusammen ein substituiertes oder unsubstituiertes aromatisches Ringsystem bilden,
R³ und R⁴, unabhängig voneinander, C₁-C₁₂-Alkyl sind, und
R⁵ H, Halogen oder CₙF₂ₙ₊₁, mit n = 1-10, ist.

Damit stellt die vorliegende Erfindung erstmals polysubstituierte Arene bereit, die mit einer fluorhaltigen Gruppe und einer Phosphonatgruppe substituiert sind. Die erfindungsgemäße Verbindung gemäß Formel (I) enthält neben einer Cyanogruppe und einer Aminogruppe eine (hydrophile) Phosphonatgruppe vicinal zu einer (lipophilen) fluorhaltigen Gruppe.

Der Begriff "substituiert" bedeutet, dass ein oder mehrere Substituenten vorhanden sind, die ein Wasserstoffatom an einem oder mehreren Kohlenstoffatomen eines Kohlenwasserstoffgerüsts, beispielsweise an einem oder mehreren der Ring-Kohlenstoffatome einer zyklischen aromatischen Kohlenwasserstoffverbindung ersetzen. Beispiele für solche Substituenten sind Alkyl-, OAlkyl-, Zykloalkyl-, Aryl-, Heteroaryl-, Halogen-, Hydroxyl-, Phosphat-, Cyano- und Aminogruppen.

"Polysubstituiert" bedeutet mehrfach substituiert, und bedeutet hier insbesondere, dass mehrere, vorzugweise alle H-Atome an den C-Atomen des Benzenrings in Formel (I) durch Substituenten ersetzt sind. Substituenten können z.B. Cyanogruppen, Aminogruppen und dergleichen sein. "Polysubstituiertes Benzen" kann beispielsweise bedeuten, dass anstelle von H-Atomen an zwei C-Atomen des Benzenrings jeweils eine Cyanogruppe, an weiteren zwei C-Atomen jeweils eine Aminogruppe, an einem C-Atom eine Phosphonatgruppe und am verbliebenen C-Atom eine fluorhaltige Gruppe gebunden ist. "Polysubstituiertes Naphthalen" kann bedeuten, dass an einem der Benzenringe die vier nicht-gemeinsamen C-Atome mit z.B. einer Cyano-, einer Amino-, einer Phosphonat- und einer fluorhaltigen Gruppe substituiert sind.

"Polyfunktionell substituiert" bedeutet polysubstituiert mit möglichst vielen, mindestens jedoch zwei, verschiedenartigen funktionellen Gruppen als Substituenten, z.B. Substitution des Benzenrings mit einer Amino-, einer Cyano-, einer Phosphonat- und einer fluorhaltigen Gruppe. Sofern nicht ausdrücklich anders angegeben, werden die Begriffe "polysubstituiert" und "polyfunktionell substituiert" hier synonym verwendet.

"Vollständige substituiert" bedeutet, dass der Benzenring in einer erfindungsgemäßen Verbindung gemäß Formel I an jedem seiner Ring-C-Atome substituiert ist, d.h. keines der Ring-C-Atome H-Atome trägt.

Unter "Halogen" werden Elemente der Gruppe 17 des Periodensystems der Elemente verstanden, z.B. Fluor, Chlor, Brom und Iod.

Das Merkmal, wonach R¹ und R² zusammen ein aromatisches substituiertes oder unsubstituiertes Ringsystem bilden, bedeutet, dass die Reste R¹ und R² so miteinander kovalent verbunden sind, dass unter Einschluss derjenigen C-Atome des Benzenrings der Verbindung gemäß Formel (I), an die die Reste R¹ und R² gebunden sind, ein, vorzugsweise anelliertes, aromatisches Ringsystem resultiert. Das Ringsystem kann eingliedrig, zwei- oder mehrgliedrig sein, d.h. aus einem, zwei oder mehreren Ringen bestehen, wobei es sich um fünf- oder sechsgliedrige Ringe, d.h. Ringe aus fünf oder sechs Ringatomen, handeln kann. Vorzugsweise sind die Ringe sechsgliedrig, bestehen also aus sechs Ringatomen. Die Ringatome sind vorzugsweise C-Atome, können aber auch Heteroatome, z.B. Stickstoff-, Sauerstoff-, Phosphat- oder Schwefelatome, sein. Vorzugsweise enthält das Ringsystem keine Heteroatome. Auf diese Weise können polyzyklische aromatische Ringsysteme gebildet sein, die, unter Einschluss des Benzenrings der Verbindung gemäß Formel (I), beispielsweise ein Naphthalen-, Anthracen-, Phenantren-, Tetracen-, Phenalen- oder Fluorengerüst aufweisen.

Unter "Arenen" werden zyklische, planare Kohlenwasserstoffe mit aromatischem System verstanden.

Der Begriff "Alkyl" beinhaltet gesättigte und ungesättigte aliphatische (nicht-aromatische) Gruppen, einschließlich geradkettiger Alkylgruppen (z.B. Methyl, Ethyl, Propyl, Butyl, Pentyl, Hexyl, Heptyl und Octyl) und verzweigtkettiger Alkylgruppen (z.B. Isopropyl, tert-Butyl, Isobutyl).

R⁵ ist H, Halogen oder CₙF₂ₙ₊₁, wobei n = 1-10, d.h. 1, 2, 3, 4, 5, 6, 7, 8, 9 oder 10 ist. R⁵ kann beispielsweise CF₃ (n=1), C₂F₅ (n=2), C₃F₇ (n=3) oder C₄F₉ (n=4) sein. Vorzugsweise ist R⁵ H, Halogen oder CF₃.

In einer bevorzugten Ausführungsform der vorliegenden Erfindung bilden R¹ und R² unter Einschluss derjenigen C-Atome des Benzenrings der Verbindung gemäß Formel (I), an die die Reste R¹ und R² gebunden sind, einen sechsgliedrigen substituierten oder unsubstituierten aromatischen Ring, vorzugsweise einen Benzenring. Die Erfindung stellt damit beispielsweise polysubstituierte Naphthalene und/oder Naphthalenderivate bereit. Die Reste R¹ und R² können aber auch zu anderen aromatischen Ringsystemen verbunden sein.

Besonders bevorzugt handelt es sich um eine Verbindung gemäß der allgemeinen Formel (Ia) 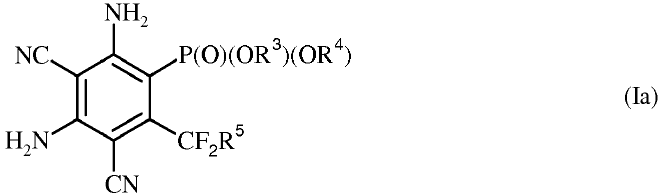 oder der allgemeinen Formel (1b)

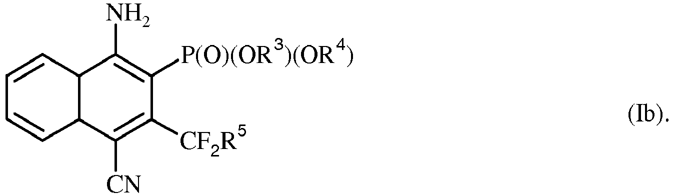

Bei R³ und R⁴ handelt es sich um C₁-C₁₂-Alkylgruppen, d.h. Alkylgruppen mit 1, 2, 3, 4, 5, 6, 7, 8, 9, 10, 11 oder 12 C-Atomen. Beispiele hierfür sind Methyl-, Ethyl-, Propyl-, Butyl-, Pentyl-, Hexyl-, Heptyl-, Octyl-, Isopropyl-, tert-Butyl-, Isobutyl- und Isopentylgruppen. Bevorzugt sind R³ und R⁴ beide Methyl oder Ethyl, besonders bevorzugt beide Ethyl (Et).

In einem zweiten Aspekt betrifft die vorliegende Erfindung auch eine erfindungsgemäße Verbindung nach dem ersten Aspekt zur Verwendung als Arzneimittel. Verbindungen gemäß der allgemeinen Formel (I) haben ein vielversprechendes Potenzial als Arzneimittel, z.B. als antientzündliche und antihyperglykämische Mittel.

In einem dritten Aspekt stellt die vorliegende Erfindung ein Verfahren zur Herstellung einer Verbindung der allgemeinen Formel (I) 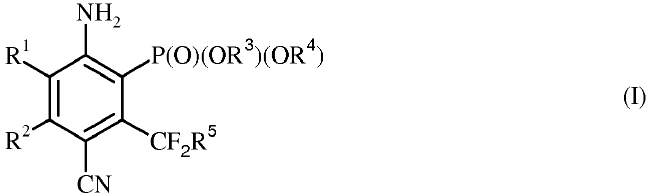 bereit, wobei
R¹ und R², unabhängig voneinander, CN oder NH₂ sind oder zusammen ein substituiertes oder unsubstituiertes aromatisches Ringsystem bilden,
R³ und R⁴, unabhängig voneinander, C₁-C₁₂-Alkyl sind, und
R⁵ H, Halogen oder CₙF₂ₙ₊₁, mit n = 1-10, ist, und wobei eine Verbindung der allgemeinen Formel (II) 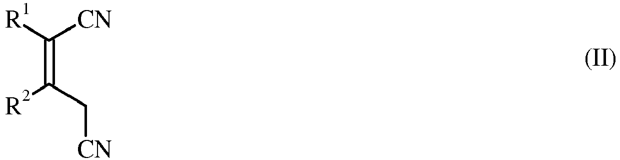 mit einer Verbindung der allgemeinen Formel (III) 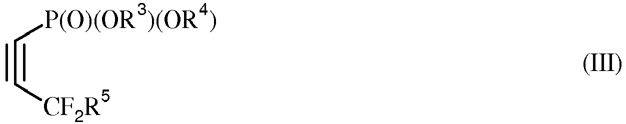
in Reaktion gebracht wird.

Das erfindungsgemäße Verfahren ist vergleichsweise atomeffizient, einfach durchführbar und regioselektiv und ermöglicht erstmals die Synthese polysubstituierter Arene mit einer Phosphonatgruppe und einer (vicinalen) fluorhaltigen Gruppe als Substituenten.

In einer bevorzugten Ausführungform des erfindungsgemäßen Verfahrens wird eine Verbindung der Formel (II) verwendet, bei der R¹ und R² unter Einschluss jener C-Atome, an die R¹ und R² gebunden sind, einen sechsgliedrigen substituierten oder unsubstituierten aromatischen Ring, vorzugsweise einen Benzenring, bilden. Das Verfahren kann jedoch auch vorteilhaft mit Verbindungen der Formel (II) durchgeführt werden, bei denen R¹ und R² komplexere aromatische Ringsysteme bilden, wie oben für den ersten Aspekt der Erfindung beschrieben.

Vorzugsweise wird bei dem erfindungsgemäßen Verfahren eine Verbindung gemäß der allgemeinen Formel (Ia) 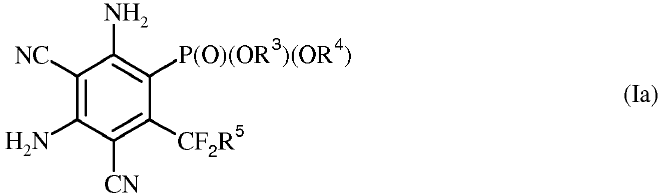 hergestellt, wobei eine Verbindung der allgemeinen Formel (IIa) 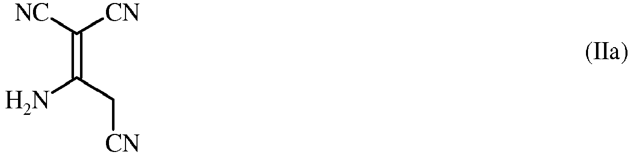 mit einer Verbindung der allgemeinen Formel (III) 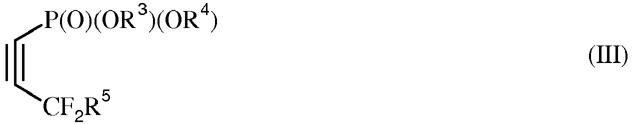 in Reaktion gebracht wird.

Weiter bevorzugt wird bei dem erfindungsgemäßen Verfahren eine Verbindung gemäß der allgemeinen Formel (Ib) 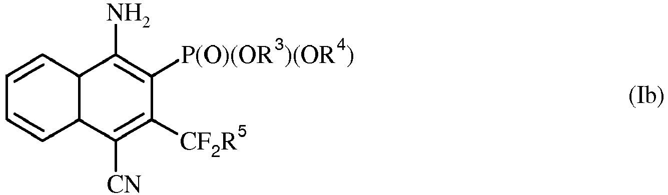 hergestellt, wobei eine Verbindung der allgemeinen Formel (IIb) 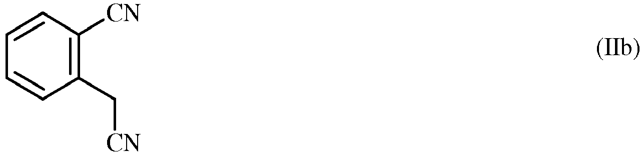 mit einer Verbindung der allgemeinen Formel (III) 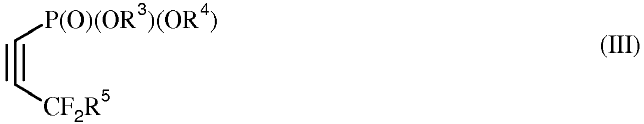 in Reaktion gebracht wird.

In einer besonders bevorzugten Ausführungform des erfindungsgemäßen Verfahrens wird zu einer Mischung aus einer Verbindung der allgemeinen Formel (II), (IIa), oder (IIb) und einer Base, bei der es sich um K₂CO₃ oder um ein tertiäres Amin wie beispielsweise iPr₂NEt, NEt₃ (Et = Ethyl, Pr = Propyl) oder DABCO (1,4-Diazabicyclo[2.2.2]octan) handeln kann, bei Raumtemperatur ein aprotisch-unpolares Lösungsmittel, beispielsweise Benzol oder Toluol, vorzugsweise Toluol, zugegeben, anschließend eine Verbindung der allgemeinen Formel (III) zugegeben und die resultierende Mischung refluxiert, d.h. unter Rückfluss gekocht. Besonders bevorzugt ist das verwendete Lösungsmittel wasserfrei, z.B. wasserfreies Toluol.

Im Folgenden wird die vorliegende Erfindung anhand von Ausführungsbeispielen allein zu Veranschaulichungszwecken näher erläutert.

Ausführungsbeispiele:

Beispielhafte erfindungsgemäße Verbindungen wurden nach dem folgenden Schema hergestellt:

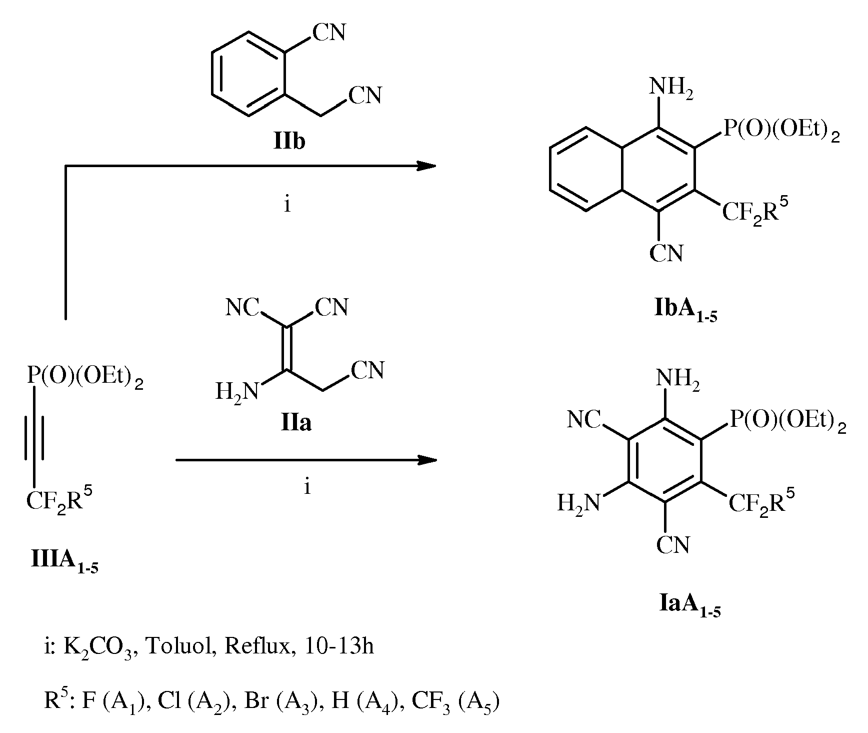

Zu einer Mischung aus IIa oder IIb (5 mmol) und K₂CO₃ (5 mmol) wurde bei Raumtemperatur wasserfreies Toluol (20 ml) gegeben. Anschließend wurden die Acetylen-Verbindungen IIIA₁₋₅ (IIIA₁: R⁵=F; IIIA₂: R⁵=Cl; IIIA₃: R⁵=Br; IIIA₄: R⁵=H; IIIA₅: R⁵=CF₃) (5 mmol) langsam zugegeben. Die Lösung wurde für weitere 11-13 Stunden unter Rückfluss gekocht. K₂CO₃ wurde abfiltriert und die verbliebene Lösung unter vermindertem Druck konzentriert. Der Rückstand wurde mittels Flash-Säulenchromatographie auf Silikagel unter Verwendung von DCM:EtOAc (Verhältnis 5:1; DCM = Dichlormethan, EtOAc = Ethylacetat) als Eluent gereinigt.

Diethyl(2,4-diamino-3,5-dicyano-6-(trifluormethyl)phenyl)phosphonat IaA₁:
Farblose Kristalle (98 %); Smp. 145-149 °C; ¹H NMR (CDCl₃, 400 MHz): δ 1,27 (t, J=6,9 Hz, 6H), 4,11 (m, 4H), 5,84 (s, 2H); ¹³C NMR (100 MHz): δ 16,0 (d, J=6,7 Hz), 63,3 (d, J=5,7 Hz), 83,1 (d, ³J_{c-p} = 15,4 Hz), 85,0 (dq, ³J_{C-P} = 14,4 Hz, ³J_{C-F} = 2,9 Hz), 97,7 (d, ¹J_{C-P} = 191,7 Hz), 114,2, 121,8 (qd, ¹J_{C-F} = 278,9 Hz), ³J_{C-P} = 6,7 Hz), 142,6 (qd, ²J_{C-F} = 32,6 Hz, ²J_{C-P} = 5,6 Hz), 155,1, 158,2 (d, ²J_{C-P} = 10,5 Hz); ¹⁵NMR (41 MHz): δ 275,2 (-CN), 266,6 (-CN), 83,1 (-NH₂), 72,7 (-NH₂); ¹⁹F NMR (376 MHz): δ -55,3; ³¹P NMR (161 MHz): δ 16,3.

Diethyl(2,4-diamino-6-(chlorodifluoromethyl)-3,5-dicyanophenyl)phosphonat IaA₂:
Farblose Kristalle (94 %); Smp. 150-153 °C; ¹H NMR (CDCl₃, 400 MHz): δ 1,33 (t, J=7,1 Hz, 6H), 4,13 (m, 4H), 5,71 (s, 2H); ¹³C NMR (100 MHz): δ 16,2 (d, J=6,7 Hz), 63,4 (d, J=6,7 Hz), 82,7 (d, ³J_{C-P} = 15,3 Hz), 85,0 (dt, ³J_{C-P} = 14,3 Hz, ³J_{C-F} = 3,8 Hz), 96,6 (d, ¹J_{C-P} = 192,6 Hz), 114,2, 114,4, 123,2 (td, ¹J_{C-F} = 295,2 Hz), ³J_{C-P} = 4,8 Hz), 148,6 (td, ²J_{C-F} = 26,8 Hz, ²J_{C-P} = 5,7 Hz), 154,9, 158,0 (d, ²J_{C-P} = 10,5 Hz); ¹⁹F NMR (376 MHz): δ -43,5; ³¹P NMR (161 MHz): δ 16,8.

Diethyl(1-amino-4-cyano-3-(trifluoromethyl)naphthalen-2-yl)phosphonat IbA₁:
Gelbliche Kristalle (97 %); Smp. 162-165 °C; ¹H NMR (CDCl₃, 400 MHz): δ 1,33 (t, J=7,1 Hz, 6H), 4,11 (m, 2H), 4,19 (m, 2H), 7,63 (t, J=7,6 Hz, 1H), 7,74 (t, J=7,8 Hz, 1H), 7,97 (br. s, 2H), 7,97 (d, J=8,5 Hz, 1H), 8,25 (d, J=8,3 Hz, 1H); ¹³C NMR (100 MHz): δ 16,1 (d, J=7,3 Hz), 63,0 (d, J=6,0 Hz), 96,9 (dq, ¹J_{C-P} = 186,6 Hz, ³J_{C-F} = 1,2 Hz) 98,2 (dq, ³J_{C-P} = 13,8 Hz, ³J_{C-F} = 3,9 Hz), 116,9, 122,0 122,8 (qd, ¹J_{C-F}=278,3 Hz, ³J_{C-P} = 5,3 Hz), 123,1 (d, ³J_{C-P} = 14,3 Hz), 127,0, 128,9, 131,5, 133,4, 136,4 (qd, ²J_{C-F} = 31,8 Hz, ²J_{C-P} = 6,4 Hz), 155,7 (d, ²J_{C-P} = 8,7 Hz); ¹⁹F NMR (376 MHz): δ-53,1; ³¹P NMR (161 MHz): δ 19,3.

Diethyl(1-amino-3-(chlorodifluoromethyl)-4-cyanonaphthalen-2-yl)phosphonat Ib A₂:
Gelbliche Kristalle (92 %); Smp. 179-182 °C; ¹H NMR (CDCl₃, 400 MHz): δ 1,35 (t, J=7,1 Hz, 6H), 4,10 (m, 2H), 4,16 (m, 2H), 7,62 (t, J=8,3 Hz, 1H), 7,73 (t, J=8,1 Hz, 1H), 7,93 (d, J=8,5 Hz, 1H), 7,94 (br. s, 2H), 8,25 (d, J=8,4 Hz, 1H); ¹³C NMR (100 MHz): δ 16,3 (d, J=7,0 Hz), 63,1 (d, J=6,7 Hz), 96,9 (d, ¹J_{C-P} = 188,3 Hz), 98,2 (dt, ³J_{C-P} = 13,0 Hz, ³J_{C-F} = 4,5 Hz), 116,2, 121,5 122,8 (d, ³J_{C-P}=13,2 Hz), 124,3 (td, ¹J_{C-F} = 294,5 Hz, ³J_{C-P} = 3,5 Hz), 126,9, 128,8, 131,5, 133,5, 142,8 (td, ²J_{C-F} = 26,2 Hz, ²J_{C-P} = 6,6 Hz), 155,4 (d, ²J_{C-P} = 9,1 Hz); ¹⁹F NMR (376 MHz): δ -40,0; ³¹P NMR (161 MHz): δ 19,8 (t, ⁴J_{P-F}=1,6 Hz).

### Literatur

[1] Nair, V.; Vidya, N.; Biju, A.T.; Deepthi, A.; Abhilash, K.G.; Suresh, E., Tetrahedron 2006, 62, 10136-40
[2] Ram, V. J.; Agarwal, N. Tetrahedron Lett. 2001, 42, 7127-29
[3] Wang, X.-S.; Zhang, M.-M.; Li, Q.; Yao, C.-S.; Tu, S.-J. Tetrahedron Lett. 2007, 63, 5265-73
[4] Xue, D.; Li, J.;Zhang, Z.-T.; Deng, J.-G., J. Org. Chem. 2007, 72, 5443-45
[5] Heilman, W. P.; Battershell, R. D.; Pyne, W. J.; Goble, P. H.; Magee, T.A.; Matthews, R. J., J. Med. Chem. 1978, 21, 906-13
[6] Singh, F.V.; Parihar, A.; Chaurasia, S.; Singh, A. B.; Singh, S. P.; Tamrakar, A. K.; Srivastava, A. K.; Goel, A., Bioorg. Med. Chem. Lett. 2009, 19, 2158-61
[7] Yakaiah, T.; Lingaiah, B. P. V.; Narsaiah, B.; Shireesha, B.; Ashok Kumar, B.; Gururaj, S.; Parthasarathy, T.; Sridhar, B., Bioorg. Med. Chem. Lett. 2007, 17, 3445-53
[8] Dumur, F.; Gautier, N.; Gallego-Planas, N.; 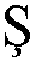 ahin, Y.; Levillain, E.; Mercier, N.; Hudhomme, P.; Masino, M.; Girlando, A.; Lloveras, V.; Vidal-Gancedo, J.; Veciana, J.; Rovira, C., J. Org. Chem. 2004, 69, 2164-77
[9] Xiao, Y.; Qian, X., Tetrahedron Lett. 2003, 44, 2087-91
[10] Kuneck, H.; Huber, M., Angew. Chem. Int. Ed. 1995, 34, 849-66
[11] Long, N. J., Angew. Chem. Int. Ed. 1995, 34, 21-38
[12] Engel, R., Chem. Rev. 1977, 77, 349-67
[13] O'Hagan, D., Chem. Soc. Rev. 2008, 37, 308-19;
[14] Purser, S.; Moore, P. R.; Swallow, S.; Gouverneur, Y., Chem. Soc. Rev. 2008, 37, 320-30
[15] Pearson, D. E.; Buehler, C. A., Synthesis 1972, 1972, 533, 42
[16] Buncel, E.; Dust, J.M.; Terrier, F., Chem. Rev. 1995, 95, 2261-80
[17] Hassan, J.; Sevignon, M.; Gozzi, C.; Schulz, E.; Lemaire, M., Chem. Rev. 2002, 102, 1359-470
[18] Saito, S.; Yamamoto, Y., Chem. Rev. 2000, 100, 2901-16
[19] Sadek, K.U.; Shaker, R.M.; Elrady, M.A.; Elnagdi, M. H., Tetrahedron Lett. 2010, 51, 6319-21.
[20] Mauro Freccero, M. M., Angelo Albini, Tetrahedron 1994, 50, 2115-30
[21] Eietsu Hasegawa; Martha Brumfield; Mariano, P. J. Org.Chem. 1988, 53, 5435-42
[22] Daniel Reux, F. P. J., Chem. Soc., Chem. Commun. 1991, 1419-20.
[23] Milart, P.; Wilamowski, J.; Sepiol, J. J., Tetrahedron 1998, 54, 15643-56
[24] M., T. B. Science 1991, 254, 1471-77
[25] Trost, B. M., Angew. Chem. Int. Ed. 1995, 34, 259-81
[26] Romanenko, V.D.; Kukhar, V. P., Chem. Rev.2006, 106, 3868-935

## Patentansprüche

1. Verbindung der allgemeinen Formel (I) 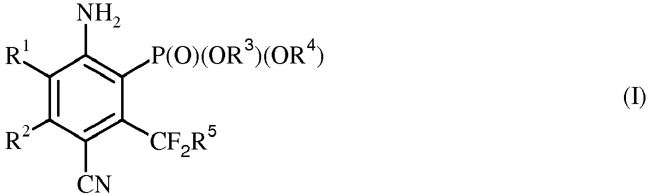 wobei
R¹ und R², unabhängig voneinander, CN oder NH₂ sind oder zusammen ein substituiertes oder unsubstituiertes aromatisches Ringsystem bilden,
R³ und R⁴, unabhängig voneinander, C₁-C₁₂-Alkyl sind, und
R⁵ H, Halogen oder CₙF₂ₙ₊₁, mit n = 1-10, ist.

2. Verbindung nach Anspruch 1, **dadurch gekennzeichnet, dass** R¹ und R² unter Einschluss der C-Atome des Benzenrings der Verbindung gemäß Formel I, an die R¹ und R² gebunden sind, einen sechsgliedrigen substituierten oder unsubstituierten aromatischen Ring, vorzugsweise einen Benzenring, bilden.

3. Verbindung nach einem der Ansprüche 1 oder 2, **dadurch gekennzeichnet, dass** die Verbindung eine Verbindung gemäß der allgemeinen Formel (Ia) 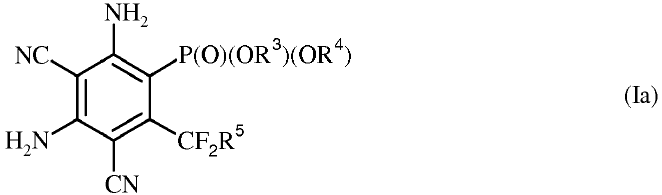 oder der allgemeinen Formel (1b) 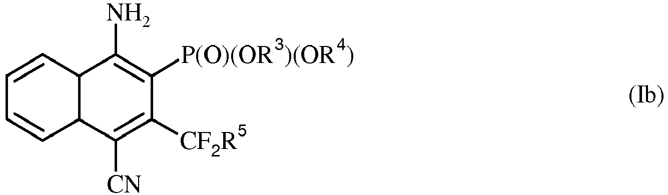 ist, wobei R³ und R⁴ vorzugsweise Ethylreste sind.

4. Verbindung nach einem der Ansprüche 1 bis 3 zur Verwendung als Arzneimittel.

5. Verfahren zur Herstellung einer Verbindung der allgemeinen Formel (I) 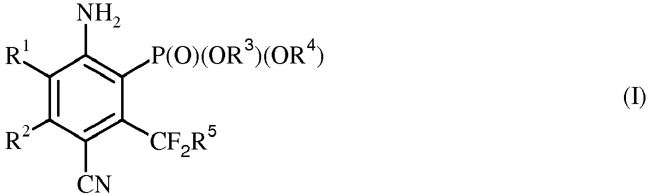 wobei
R¹ und R², unabhängig voneinander, CN oder NH₂ sind oder zusammen ein substituiertes oder unsubstituiertes aromatisches Ringsystem bilden,
R³ und R⁴, unabhängig voneinander, C₁-C₁₂-Alkyl sind, und
R⁵ H, Halogen oder CₙF₂ₙ₊₁, mit n = 1-10, ist, und wobei eine Verbindung der allgemeinen Formel (II) 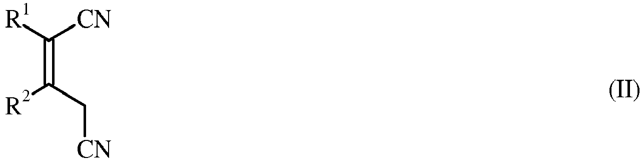 mit einer Verbindung der allgemeinen Formel (III) 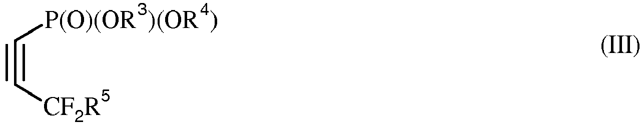
in Reaktion gebracht wird.

6. Verfahren nach Anspruch 5, **dadurch gekennzeichnet, dass** eine Verbindung der Formel (II) verwendet wird, bei der R¹ und R² unter Einschluss der C-Atome, an die R¹ und R² gebunden sind, einen sechsgliedrigen substituierten oder unsubstituierten aromatischen Ring, vorzugsweise einen Benzenring, bilden.

7. Verfahren nach Anspruch 5 oder 6, **dadurch gekennzeichnet, dass** zur Herstellung einer Verbindung gemäß der allgemeinen Formel (Ia) 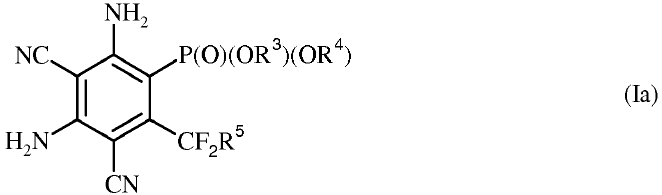 oder der allgemeinen Formel (1b) 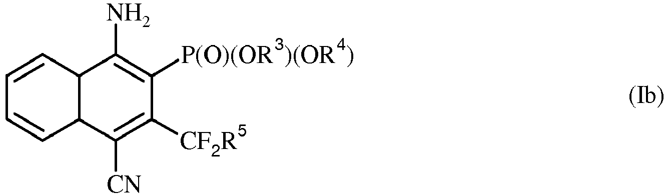 eine Verbindung der allgemeinen Formel (IIa) 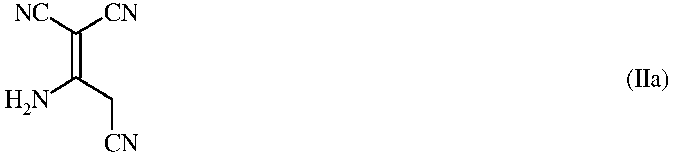 oder eine Verbindung der allgemeinen Formel (IIb) 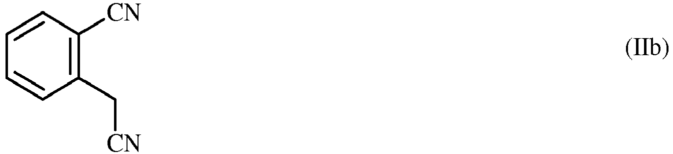 mit einer Verbindung der allgemeinen Formel (III) 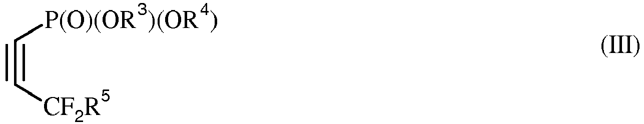 in Reaktion gebracht wird.

8. Verfahren nach einem der Ansprüche 5 bis 7, **dadurch gekennzeichnet, dass** zu einer Mischung aus einer Verbindung der allgemeinen Formel (II), (IIa), oder (IIb) und einer Base, die vorzugsweise K₂CO₃ oder ein tertiäres Amin ist, bei Raumtemperatur ein aprotisch-unpolares Lösungsmittel, vorzugsweise Toluol, zugegeben wird, anschließend eine Verbindung der allgemeinen Formel (III) zugegeben und die resultierende Mischung refluxiert wird.

## Claims

1. A compound of the general formula (I) 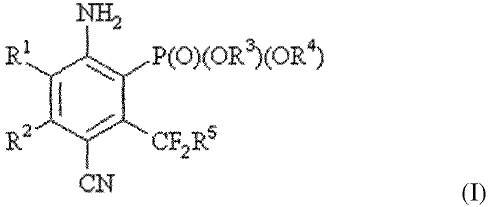 wherein
R¹ and R² independently represent CN or NH₂ or together form a substituted or unsubstituted aromatic ring system,
R³ and R⁴ independently represent C₁-C₁₂-Alkyl, and
R⁴ represents H, Halogen or CₙF₂ₙ₊₁, wherein n = 1-10.

2. The compound according to claim 1, **characterized in that** R¹ and R² are bonded to R¹ and R² by the inclusion of the C atoms of the benzene ring of the compound according to formula I, and form a six-membered substituted or unsubstituted aromatic ring, preferably a benzene ring.

3. The compound according to one of the claims 1 or 2, **characterized in that** the compound is a compound of the general formula (Ia) 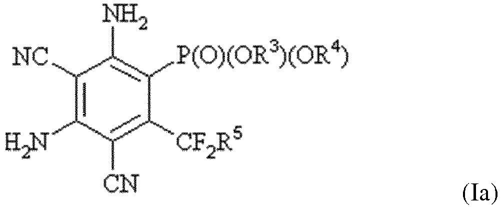 or of the general formula (Ib) 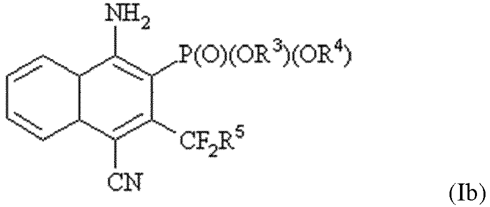 wherein R³ and R⁴ are preferably Ethyl rests.

4. The compound according to one of the claims 1 to 3 to be used as a medicine.

5. A method for producing a compound of the general formula (I) 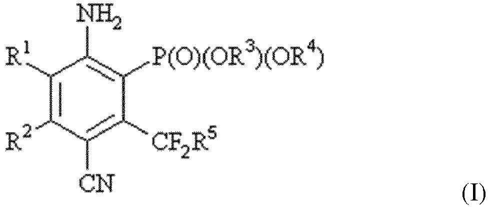 wherein
R¹ and R² independently represent CN or NH₂ or together form a substituted or unsubstituted aromatic ring system,
R³ and R⁴ independently represent C₁-C₁₂-Alkyl, and
R⁵ represents H, Halogen or CₙF₂ₙ₊₁, wherein n = 1-10 and wherein a compound of the general formula (II) 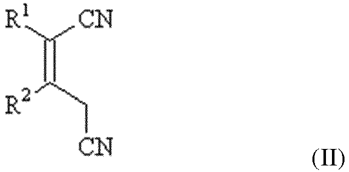 is reacted with a compound of the general formula (III)

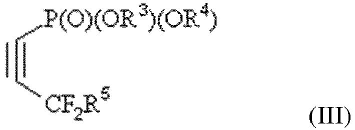

6. The method according to claim 5, **characterized in that** a compound of the general formula (II) is used, in which R¹ and R² are bonded to R¹ and R² by the inclusion of the C atoms, and form a six-membered substituted or unsubstituted aromatic ring, preferably a benzene ring.

7. The method according to claim 5 or 6, **characterized in that** in order to produce a compound of the general formula (Ia) 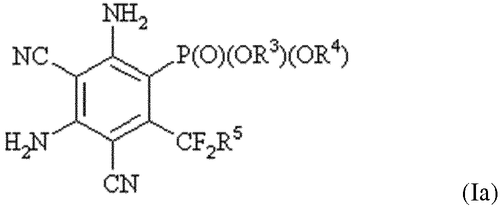 or of the general formula (Ib) 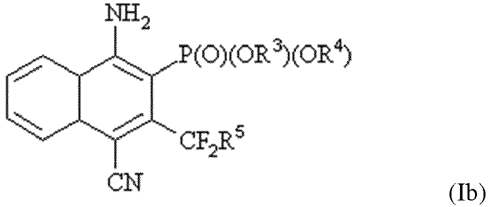 a compound of the general formula (IIa) 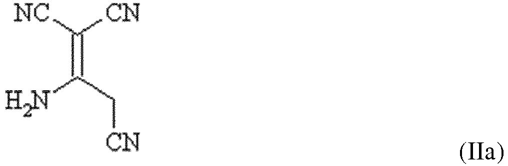 or a compound of the general formula (IIb) 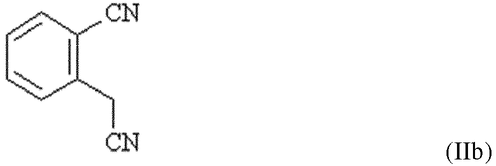 is reacted with a compound of the general formula (III)

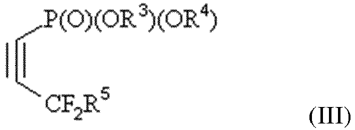

8. The method according to one of the claims 5 to 7, **characterized in that** an nonpolar aprotic solvent, preferably toluene, is added at room temperature to a mixture of a compound of the general formula (II), (IIa) or (IIb) and of a base, which is preferably K₂CO₃ or tertiary amine, a compound of the general formula (III) is then added and the resulting mixture is refluxed.

## Revendications

1. Composé de formule générale (I) 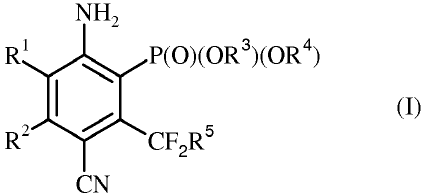 où
R¹ et R² sont indépendamment l'un de l'autre, CN ou NH₂ ou forment ensemble un système cyclique aromatique substitué ou non substitué,
R³ et R⁴ sont indépendamment l'un de l'autre, C₁-C₁₂-Alkyl, et
R⁵ est H, Halogène ou CₙF₂ₙ₊₁, où n = 1-10.

2. Composé selon la revendication 1, **caractérisé en ce que** R¹ et R² sont liés à R¹ et R² par inclusion des atomes de C du cycle benzénique du composé selon la formule I, formant ainsi un cycle aromatique substitué ou non substitué à six éléments, de préférence un cycle benzénique.

3. Composé selon la revendication 1 ou 2, **caractérisé en ce que** le composé est un composé de formule générale (Ia) 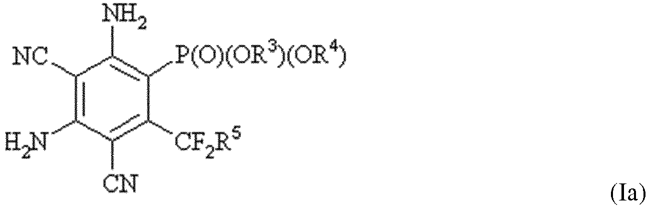 ou de formule générale (Ib) 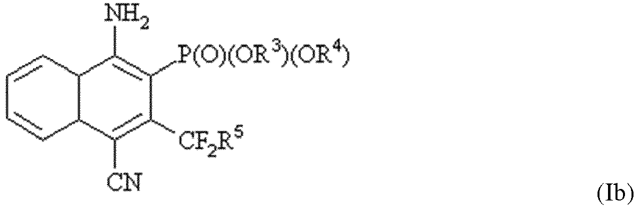 où R³ et R⁴ sont de préférence des radicaux éthyles.

4. Composé selon l'une des revendications 1 à 3 destiné à être utilisé en tant que médicament.

5. Procédé de production d'un composé de formule générale (I) 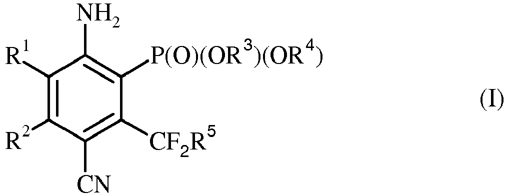 où
R¹ et R² sont indépendamment l'un de l'autre, CN ou NH₂ ou forment ensemble un système cyclique aromatique substitué ou non substitué,
R³ et R⁴ sont indépendamment l'un de l'autre, C₁-C₁₂-Alkyl, et
R⁵ est H, Halogène ou CₙF₂ₙ₊₁, où n = 1-10 et où l'on fait réagir le composé de formule générale (II) 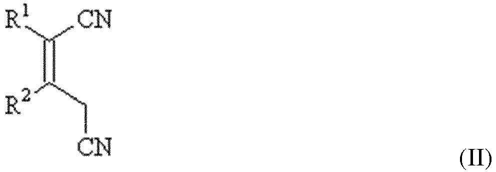 avec le composé de formule générale (III)

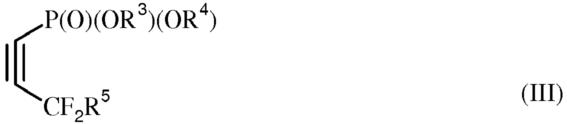

6. Procédé selon la revendication 5, **caractérisé en ce que** l'on utilise un composé de formule (II), dans lequel R¹ et R² sont liés à R¹ et R² par inclusion des atomes de C, formant ainsi un cycle aromatique substitué ou non substitué à six éléments, de préférence un cycle benzénique.

7. Procédé selon la revendication 5 ou 6, **caractérisé en ce que** pour produire un composé de formule générale (Ia) 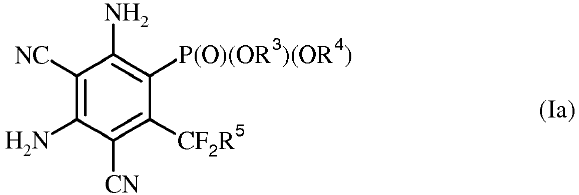 ou de formule générale (Ib) 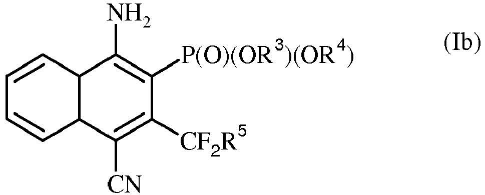 l'on fait réagir un composé de formule générale (IIa) 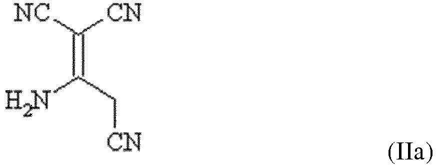 ou un composé de formule générale (IIb) 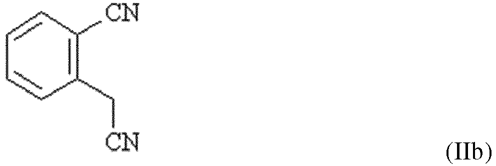 avec un composé de formule générale (III).

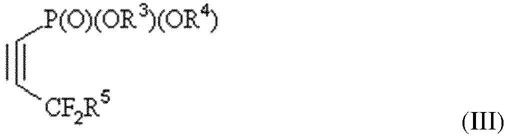

8. Procédé selon l'une quelconque des revendications 5 à 7, **caractérisé en ce qu'**un solvant aprotique non polaire, de préférence du toluène, est ajouté, à température ambiante, à un mélange d'un composé de formule générale (II), (IIa) ou (IIb) et d'une base étant de préférence du K₂CO₃ ou une amine tertiaire, qu'un composé de formule générale (III) y est ensuite ajouté et que le mélange en résultant est porté à reflux.
